(19) Europäisches Patentamt
European Patent Office
Office européen des brevets

(11)  **EP 0 926 059 B1**

(12)  **EUROPEAN PATENT SPECIFICATION**

(45) Date of publication and mention
of the grant of the patent:
**08.10.2008  Bulletin 2008/41**

(51) Int Cl.:
***B62M 23/02*** *(2006.01)*

(21) Application number: **98310636.0**

(22) Date of filing: **23.12.1998**

(54) **Vehicle with power assist unit and controlling method therefor**

Fahrzeug mit Hilfsmotor und Verfahren zu dessen Regelung

Véhicule avec moteur auxiliaire et procédé de commande

(84) Designated Contracting States:
**DE FR NL**

(30) Priority: **24.12.1997  JP 35442997**
**28.05.1998  JP 14715098**

(43) Date of publication of application:
**30.06.1999  Bulletin 1999/26**

(73) Proprietors:
- **MATSUSHITA ELECTRIC INDUSTRIAL CO., LTD.**
**Kadoma-shi,**
**Osaka-fu 571-8501 (JP)**
- **Kosuge, Kazuhiro**
**Sendai City, 981-3214 (JP)**

(72) Inventors:
- **Kosuge, Kazuhiro**
**Sendai City 981-3214 (JP)**
- **Yoshida, Hidehiro**
**Katano City 576-0054 (JP)**
- **Inoue, Toshitsugu**
**Kyotanabe City 610-0353 (JP)**
- **Nakata, Hiroyuki**
**Ikuno-ku,**
**Osaka City 544-0023 (JP)**
- **Tanida, Masato**
**Kashiba City 639-0226 (JP)**
- **Yamamoto, Hideki**
**Fujiidera City 583-0005 (JP)**
- **Enomoto, Yasuo**
**Tennoji-ku,**
**Osaka City 543-0041 (JP)**
- **Nishimura, Toshio**
**Kitakatsuragi-gun,**
**Nara Pref. 635-0833 (JP)**

(74) Representative: **Price, Paul Anthony King et al**
**D Young & Co**
**120 Holborn**
**London EC1N 2DY (GB)**

(56) References cited:
**EP-A- 0 706 909        EP-A- 0 734 945**
**DE-A- 19 601 194**

- **PATENT ABSTRACTS OF JAPAN vol. 1996, no. 08, 30 August 1996 (1996-08-30) & JP 08 099683 A (SUZUKI MOTOR CORP), 16 April 1996 (1996-04-16)**

**Description**

The present invention relates to a vehicle with power assist unit which is driven by using human power and assist power from the power assist unit, and a controlling method for the same.

Recently, a vehicle with power assist unit has been developed to include a known drive device, such as an electric motor, as a power assist unit, and driven by assist power from the power assist unit applied in addition to a force (hereinafter referred to as a "human drive power") based on human power by an operator, a user or the like. Specific examples of such vehicles are a bicycle with the motor, a wheelchair with the motor, a cargo carrier with the motor and the like. In this kind of vehicle, assist power generated by the motor is added over a rotation power generated by pressing pedals or a rotation power generated by rotating hand rims of wheels. This type of vehicle with power assist unit are driven by always adding the assist power to the human drive power with a certain ratio (hereinafter referred to as an "assist ratio").

For example, a bicycle with electric motor has been disclosed in Japanese Laid-open Patent. Application No. Hei 6-255564 as a first conventional vehicle with power assist unit. This first conventional vehicle with power assist unit is provided with a motor output calculation unit which measures human drive power in one period of motion cycle and then determines an average electric motor output (or an average torque) for the next period on the basis of the value of the measurement. The first conventional vehicle with power assist unit is also provided with an output control unit for generating the obtained motor output. In other words, in the first conventional vehicle with power assist unit, the output torque of the electric motor is controlled by responding in each period of a change in the detected human drive force, thereby to drive the vehicle.

However, the first conventional vehicle with power assist unit is configured to add assist power having a constant assist ratio for the human drive power responding in each period of a change in the detected human drive power to the human drive power without regard for running resistances corresponding to road surface and meteorological conditions. For this reason, in the first conventional vehicle with power assist unit, it was impossible to drive its wheels appropriately responding with change of the running resistances.

As a second conventional vehicle with power assist unit, an assist power control method for a power-assisted bicycle and an apparatus for the same have been disclosed in Japanese Laid-open Patent Application No. Hei 8-99683. This second conventional vehicle with power assist unit is provided with a speed sensor for detecting vehicle speed and a sensor for detecting acceleration of the vehicle and inclination angle of road surface. In the second conventional vehicle with power assist unit, the amount of work due to the bicycle is estimated on the basis of the detected speed and acceleration or inclination angle. With this configuration of the second conventional vehicle with power assist unit, the output torque of the electric motor is determined on the basis of the estimated human drive power without directly detecting the human drive power.

However, in the second conventional vehicle with power assist unit, it was impossible to detect change of the running resistances. For this reason, just as in the case of the first conventional vehicle with power assist unit, the second conventional vehicle with power assist unit cannot appropriately drive its wheels responding with the change of the running resistances.

As described above, in the conventional vehicles with power assist units, the assist ratio cannot be changed or determined to an optimal value in response to the change of the running resistances because the assist power is determined responding with the human drive power and the amount of work thereof. Therefore, an assist ratio suited for a running environment cannot be determined in the case of the conventional vehicles with power assist units, and an excessive burden or too much assist power were imposed on the operator or user. This results in lowering the ride comfort of the vehicle (bicycle) in the conventional vehicle with power assist unit.

EP-A-0,734,945 discloses an electrically powered bicycle having the features of the pre-characterizing portion of Claim 1.

BRIEF SUMMARY OF THE INVENTION

According to a first aspect of the present invention, there is provided a vehicle with a power assist unit, comprising a vehicle running unit for running said vehicle, a human drive unit for supplying a human drive power to said vehicle running unit, an assist power drive unit for supplying assist power to said vehicle running unit, and a control unit for controlling said assist power drive unit, said control unit comprising:

  an acceleration detection unit for detecting the speed and the acceleration of said vehicle, and
  an assist ratio determination unit for determining the assist ratio of said assist power drive unit to said human drive unit on the basis of said acceleration from said acceleration detection unit,
  characterized in that said control unit further comprises:

a human drive power detection unit for detecting a human drive force,

a reference environment setting unit for presetting various reference parameters in a reference environment wherein said vehicle runs, and

an acceleration calculation unit in said reference environment for calculating an acceleration in said reference environment in the case where said vehicle runs in said reference environment on the basis of said human drive force from said human drive power detection unit, said speed from said acceleration detection unit and said parameters in said reference environment from said reference environment setting unit, and

wherein said assist ratio determination unit is arranged to determine the assist ratio of said assist power drive unit to said human drive unit also on the basis of said acceleration in said reference environment from said acceleration calculation unit.

With this configuration of the vehicle with power assist unit of the present invention, it is possible to determine an assist ratio suited for a running environment responding with change of running resistances. As a result, the vehicle can be driven appropriately. Consequently, the vehicle can run naturally and smoothly without excessive burden and too much assist power on an operator or the like with respect to the ride comfort and performance of the vehicle.

According to a second aspect of the present invention, there is provided a method of controlling a vehicle with power assist unit, wherein said vehicle comprises a vehicle running unit for running said vehicle, a human drive unit for supplying a human drive power to said vehicle running unit and an assist power drive unit for supplying assist power to said vehicle running unit, said method comprising:

a detection step for detecting the speed and the acceleration of said vehicle, and a human drive force supplied to said vehicle running unit,

an acceleration calculation step for calculating an acceleration in a reference environment in the case where said vehicle runs in said reference environment on the basis of said speed and said human drive force detected in said detection step, and preset various reference parameters for said reference environment, and

a determination step for determining the assist ratio of said assist power drive unit to said human drive unit on the basis of said acceleration detected in said detection step and said acceleration in said reference environment calculated in said acceleration calculation step.

## BRIEF DESCRIPTION OF THE SEVERAL VIEWS OF THE DRAWINGS

FIG. 1 is an overall view showing a general configuration of a vehicle with power assist unit of a preferred embodiment of the present invention.

FIG. 2 is a block diagram showing the configuration of the vehicle with power assist unit shown in FIG. 1.

FIG. 3 is a graph showing an example of a human drive force detected by a human drive power detection unit shown in FIG. 2.

FIG. 4 is a graph showing a relationship between an acceleration and a human drive force obtained by an acceleration calculation unit in a reference environment shown in FIG. 1.

FIG. 5 is a flowchart showing the operation of the vehicle with power assist unit shown in FIG. 1.

## DETAILED DESCRIPTION OF THE PREFERRED EMBODIMENT OF THE INVENTION

A preferred embodiment of a vehicle with power assist unit and controlling method for the same of the present invention will be described with reference to the accompanying drawings. In the following description, a bicycle driven by a leg power (a pedal pressing power) in combination with an assist power will be described as a preferred embodiment of the vehicle with the power assist unit of the present invention.

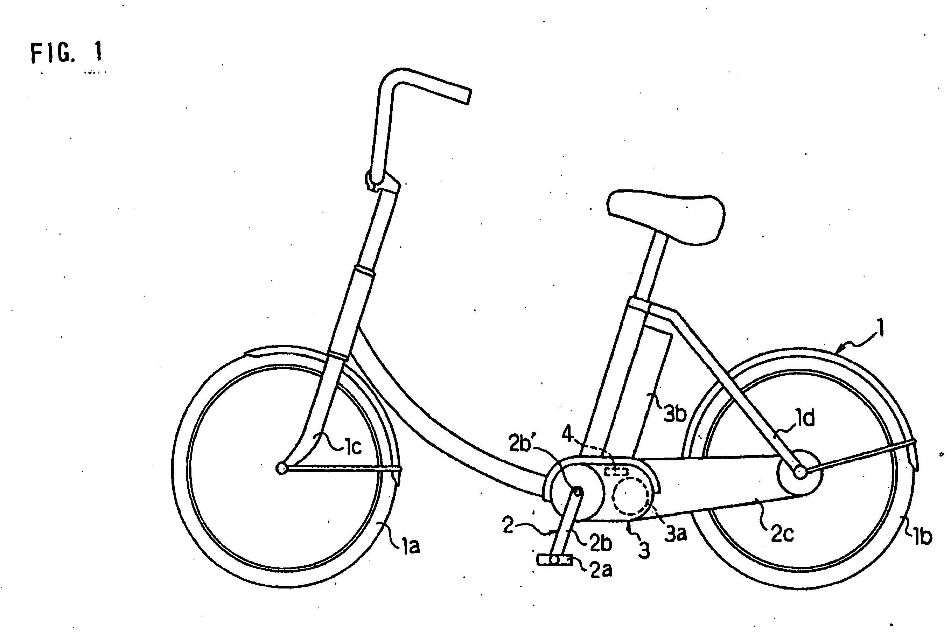

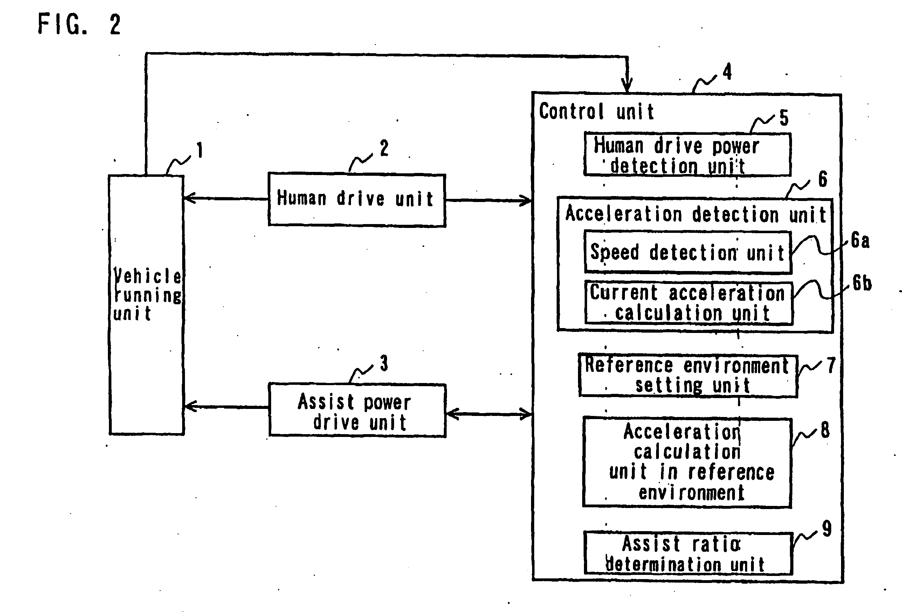

FIG. 1 is an overall view showing a general configuration of a vehicle with power assist unit of a preferred embodiment of the present invention. FIG. 2 is a block diagram showing the configuration of the vehicle with power assist shown in FIG. 1.

As shown in FIGs. 1 and 2, a vehicle with power assist unit of the present embodiment comprises a vehicle running unit 1 for running the vehicle, a human drive unit 2 and an assist power drive unit 3 for assistingly driving the vehicle running unit 1, and a control unit 4 for controlling the assist power drive unit 3.

The vehicle running unit 1 is provided with wheels 1a and 1b rotatably making contact with a road surface to allow the vehicle to run, and support mechanisms 1c and 1d for rotatably supporting the wheels 1a and 1b, respectively. A human drive power from the human drive unit 2 and an assist power from the assist power drive unit 3 are supplied to the vehicle running unit 1. As a result, the wheels 1a and 1b are rotated by total powers, and the vehicle runs.

The human drive unit 2 includes pedals 2a for receiving a human drive power from an operator or a user, and a transmission mechanism 2c comprising a pedal crank 2b, a chain, and a one-way clutch for transmitting the human drive power to the vehicle running unit 1 as the human drive force. Furthermore, the transmission mechanism 2c may be configured with use of a shaft drive.

The assist power drive unit 3 includes a known drive unit 3a such as an actuator having an electric motor, and a battery 3b such as a secondary battery used as an electric power supply for the drive unit 3a. The drive unit 3a is activated (rotated) on the basis of an instruction signal from the control unit 4. Furthermore, output of the assist power drive unit 3 is transmitted as the assist power to the vehicle running unit 1 via the transmission mechanism 2c. A transmission mechanism for the assist power drive unit 3 is configured with a common mechanism for the human drive unit 2, and alternatively configured with an exclusive mechanism.

The control unit 4 includes a human drive power detection unit 5 for detecting the human drive force $Fh$ transmitted from the human drive unit 2 to the vehicle running unit 1. The control unit 4 further includes an acceleration detection unit 6 for detecting a current acceleration $\alpha_1$ of the vehicle, and a reference environment setting unit 7 for presetting various references parameters in a reference environment described later. In addition, the control unit 4 includes an acceleration calculation unit 8 for calculating acceleration $\alpha_0$ in the reference environment of the vehicle. The control unit 4 further includes an assist ratio determination unit 9 for determining a ratio $Q$ (hereinafter referred to as an "assist ratio") of the assist power to the detected human drive force on the basis of the acceleration $\alpha_0$ in the reference environment and the current acceleration $\alpha_1$.

The human drive power detection unit 5 is formed of a torque sensor, and detects the human drive force $Fh$, which is proportional to the human drive power, in a predetermined time period (1 msec for example). The human drive power detection unit 5 outputs the detected human drive force $Fh$ to the acceleration calculation unit.8 and the assist ratio determination unit 9. The torque sensor is herein defined as a non-contact sensor which can detect the human drive force $Fh$ transmitted from the human drive unit 2 to the vehicle running unit 1 as a torque without making connection to a member of the human drive unit 2, such as a crankshaft 2b', via a mechanical member or a wire, or without making sliding contact. More specifically, a magnetic-distortion torque sensor comprising a belt-like magnetic film for generating a distortion in response to a change in the human drive force $Fh$ applied to the pedal crank 2b and a coil for detecting a change in magnetic permeability due to the distortion is taken as an example of the non-contact torque sensor. Instead of the non-contact torque sensor, another torque sensor is also available which comprises a spring disposed between the crankshaft 2b' and a drive sprocket (not shown), and detects a torque by detecting a strain generated in the spring by using an optical encoder or a Hall-effect device.

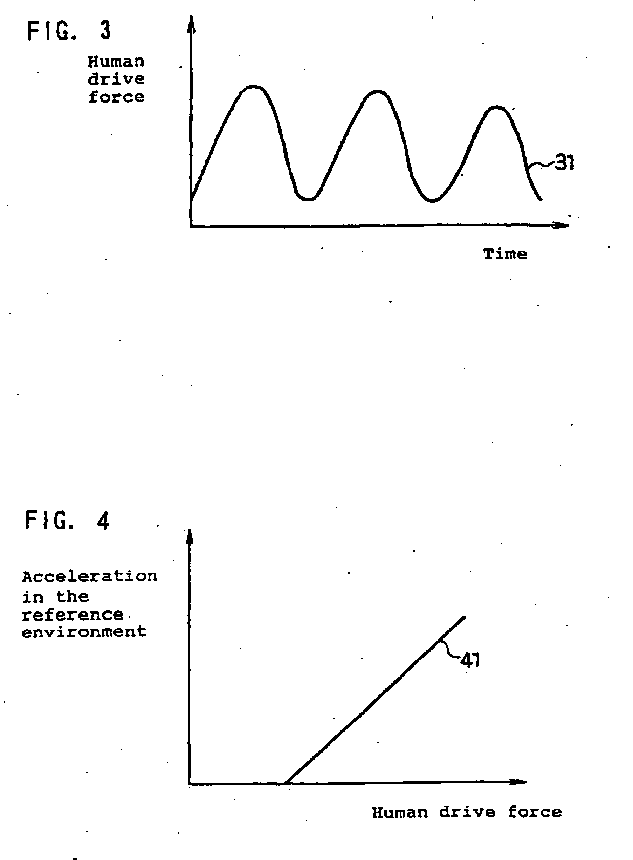

The human drive force $Fh$ detected by the human drive power detection unit 5 pulsates in response to the rotation of the pedal crank 2b as shown by a curve 31 shown in FIG. 3. The period of the pulsation is inversely proportional to the rotation speed of the pedal crank 2b. For this reason, when the pulsating human drive force $Fh$ is used, the assist ratio is changed frequently, whereby the ride comfort of the vehicle may be lowered. To solve this problem, it may be possible to have a configuration wherein the human drive power detection unit 5 calculates the average value of a plurality of continuously detected human drive force values, and outputs the average value to the acceleration calculation unit 8 and the assist ratio determination unit 9. Furthermore, it may also be possible to have a configuration wherein the maximum value of the human drive force detected in one period is multiplied by a predetermined value ($1/\sqrt{2}$ for example) and output to the acceleration calculation unit 8 and the assist ratio determination unit 9. With these configurations, the change in the assist ratio $Q$ becomes smooth, and it is possible to prevent the ride comfort of the vehicle from being lowered.

The acceleration detection unit 6 comprises a speed detection unit 6a for detecting the current speed $V$ of the vehicle, and an acceleration calculation unit 6b for calculating the current acceleration $\alpha_1$ on the basis of the detected speed $V$. The speed detection unit 6a is formed of a mechanical-optical type or electromagnetic type encoder for example, and outputs the detected speed $V$ to the acceleration calculation unit 6b and the acceleration calculation unit 8 in the reference environment.

Instead of the configuration described above, it may be possible to have a configuration wherein the acceleration detection unit 6 calculates the period of the human drive force $Fh$ by using the human drive force $Fh$ from the human drive power detection unit 5, and then calculates the speed $V$ and the acceleration $\alpha_1$ of the vehicle. With this configuration, no speed sensor is required to be used.

The reference environment setting unit 7 is used to preset reference environment parameters required for calculating an acceleration in an estimated reference environment including road surface and meteorological conditions. Specific reference environment parameters are the inclination angle $\theta$ of a road surface and running resistance $d$ exerted on the vehicle. The running resistance $d$ is stipulated in accordance with the above-mentioned inclination angle $\theta$, a kinetic friction force from the road surface, air resistance due to meteorological conditions such as wind, etc.

The acceleration calculation unit 8 calculates acceleration $\alpha_0$ in the reference environment when the vehicle runs therein. This calculation is carried out on the basis of the human drive force $Fh$ from the human drive power detection unit 5, the speed $V$ from the speed detection unit 6a and the reference environment parameters (the inclination angle $\theta$

and the running resistance d) preset by the reference environment setting unit 7. More specifically, the acceleration calculation unit 8 calculates the above-mentioned acceleration $\alpha_0$ by using the following equation of motion (1) for the vehicle, and outputs the acceleration $\alpha_0$ to the assist ratio determination unit 9.

$$m \times \alpha + d \times V + m \times g \times \sin\theta = Fh + Q \times Fh \qquad \text{--- (1)}$$

In the equation (1), m is the overall weight of the vehicle including the standard weight of the operator (60 kg for example), and g is the gravitational acceleration. The overall weight m and the gravitational acceleration g have been set beforehand in the acceleration calculation unit 8. Instead of use of the standard weight, it may be possible to use a detected weight of the operator with a load sensor. The second term on the right side of the equation (1) represents the assist power of the assist power drive unit 3. A predetermined initial value has been set as the assist ratio Q.

By substituting the reference environment parameters, the initial value of the assist ratio Q, the speed V and the human drive force Fh into the equation (1), the relationship between the acceleration $\alpha_0$ and the human drive force Fh in the reference environment shown by a linear line 41 in FIG. 4 is obtained in the acceleration calculation unit 8 for example.

The assist ratio determination unit 9 compares the current acceleration $\alpha_1$ from the acceleration detection unit 6 with the acceleration $\alpha_0$ in the reference environment from the acceleration calculation unit 8. In the case when the current acceleration $\alpha_1$ is larger than the acceleration $\alpha_0$ in the reference environment, that is, in the case where the current acceleration $\alpha_1$ is located in an area above the linear line 41 shown in FIG. 4 the assist ratio determination unit 9 judges that the initial value of the assist ratio Q is excessive for the current running environment. The assist ratio determination unit 9 then decreases the initial value of the assist ratio Q by a preset predetermined value. As a result, an instruction signal for decreasing the assist ratio Q is delivered from the control unit 4 to the assist power drive unit 3.

On the other hand, in the case when the current acceleration $\alpha_1$ is smaller than the acceleration $\alpha_0$ in the reference environment, that is, in the case where the current acceleration $\alpha_1$ is located in an area below the linear line 41 shown in FIG. 4, the assist ratio determination unit 9 judges that the initial value of the assist ratio Q is insufficient for the current running environment. The assist ratio determination unit 9 then increases the initial value of the assist ratio Q by the preset predetermined value. As a result, an instruction signal for increasing the assist ratio Q is delivered from the control unit 4 to the assist power drive unit 3.

As described above, the assist ratio determination unit 9 of the present embodiment can determine an assist ratio suited for a running environment responding with change of the running resistances. As a result, the vehicle can be driven appropriately.

Instead of the above-mentioned configuration, it may be possible to have a configuration wherein the assist ratio Q is zero in the case when the value of the human drive force supplied from the human drive power detection unit is zero. With this configuration, the vehicle can run safely. Furthermore, it may be possible to have a configuration wherein a sensor is provided to detect the operation angle of a brake lever operated by the operator, and the assist ratio determination unit 9 sets the assist ratio Q to zero when the operation angle becomes a predetermined angle or more.

By setting d = 0 in the above-mentioned equation (1), a running environment wherein the running resistance d is almost zero can be used as the reference environment. Furthermore, instead of the initial value, a value at the present time may be assigned to the assist ratio Q and substituted into the equation (1). Moreover, responding with a ratio between the acceleration $\alpha_0$ in the reference environment and the current acceleration $\alpha_1$, the assist ratio Q may be calculated for each ratio. Besides, even when a value is preset, it may be possible to carry out a method wherein plural setting values other than the initial value may be ready for use as the assist ratio Q, and may be selectively used appropriately as necessary.

Apart from the aforementioned explanation, wherein the assist ratio Q is changed by the preset predetermined value, an alternative configuration may be such that various values may be calculated for each ratio responding with the ratio of the acceleration $\alpha_0$ in the reference environment and the current acceleration $\alpha_1$. In addition, even when the preset predetermined value is used, it may be possible to carry out a method wherein plural predetermined values may be ready for use, and may be selectively used appropriately.

Furthermore, instead of using the equation of motion (1) for the vehicle, the equation (1) may be modified. For example, a term proportional to the square of the speed may be added to the equation (1). Moreover, it may be possible to have a configuration wherein an input device such as a numeric keypad may be provided so that the operator can change the overall weight m, the running resistance d or the inclination angle $\theta$.

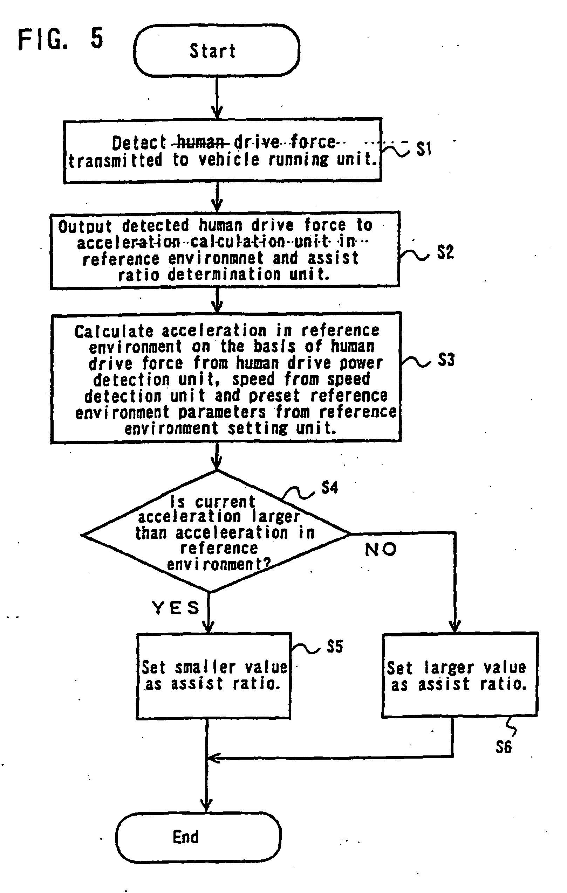

Operation of the vehicle with power assist unit will be described below referring to FIG. 5.

FIG. 5 is a flowchart showing the operation of the vehicle with power assist unit shown in FIG. 1.

As shown in FIG. 5, in the vehicle with power assist unit of the present embodiment, the human drive power detection unit 5 detects the human drive force transmitted from the human drive unit 2 to the vehicle running unit 1 in the first place (step S1). After this, the human drive power detection unit 5 outputs the detected human drive force to the acceleration calculation unit 8 in the reference environment and the assist ratio determination unit 9 (step S2).

Next, the acceleration calculation unit 8 calculates acceleration $\alpha_0$ in the reference environment based upon the human drive force Fh from the human drive power detection unit 5, the speed V from the speed detection unit 6a and the preset reference environment parameters (the inclination angle $\theta$ and the running resistance d) from the reference environment setting unit 7 (step S3). And then, the acceleration calculation unit 8 outputs the calculated acceleration $\alpha_0$ in the reference environment to the assist ratio determination unit 9.

The assist ratio determination unit 9 compares the current acceleration $\alpha_1$ supplied from the acceleration detection unit 6 with the acceleration $\alpha_0$ in the reference environment supplied from the acceleration calculation unit 8. The assist ratio determination unit 9 then determines whether the current acceleration $\alpha_1$ is larger than the acceleration $\alpha_0$ in the reference environment or not (step S4).

In the case when the current acceleration $\alpha_1$ is larger than the acceleration $\alpha_0$ in the reference environment, the assist ratio determination unit 9 determines that the initial value of the assist ratio Q is excessive for the current running environment. After this, the assist ratio determination unit 9 decreases the initial value of the assist ratio Q by the preset predetermined value, and determines the obtained value as the assist ratio (step S5). As a result, an instruction signal for decreasing the assist ratio Q is delivered from the control unit 4 to the assist power drive unit 3.

In the case when the current acceleration $\alpha_1$ is smaller than the acceleration $\alpha_0$ in the reference environment, the assist ratio determination unit 9 judges that the initial value of the assist ratio Q is insufficient for the current running environment. The assist ratio determination unit 9 then increases the initial value of the assist ratio Q by the preset predetermined value (step S6). As a result, an instruction signal for increasing the assist ratio Q is delivered from the control unit 4 to the assist power drive unit 3.

As described above, in the vehicle with power assist unit and the controlling method for the same of the present embodiment, the acceleration calculation unit 8 in the reference environment calculates acceleration $\alpha_0$ in the reference environment. This calculation is carried out on the basis of the human drive force Fh from the human drive power detection unit 5, the speed V from the speed detection unit 6a and the preset reference environment parameters from the reference environment setting unit 7. Furthermore, the assist ratio determination unit 9 compares the current acceleration $\alpha_1$ supplied from the acceleration detection unit 6 with the acceleration $\alpha_0$ in the reference environment supplied from the acceleration calculation unit 8, and determines the assist ratio Q on the basis of the result of the comparison. Thereby, in the vehicle with power assist unit and the controlling method for the same of the present embodiment, it is possible to determine the assist ratio Q suited for the running environment responding with the change of the running resistances. As a result, the vehicle can be driven appropriately. Consequently, in the vehicle with power assist unit and the controlling method of the present embodiment, the vehicle can run naturally and smoothly without imposing any sense of discomfort on an operator or the like with respect to the ride comfort of the vehicle.

Although the present invention has been described in terms of the presently preferred embodiment, it is to be understood that such disclosure is not to be interpreted as limiting.

## Claims

1. A vehicle with a power assist unit, comprising a vehicle running unit (1) for running said vehicle, a human drive unit (2) for supplying a human drive power to said vehicle running unit (1), an assist power drive unit (3) for supplying assist power to said vehicle running unit (1), and a control unit (4) for controlling said assist power drive unit (3), said control unit (4) comprising:

   an acceleration detection unit (6) for detecting the speed and the acceleration of said vehicle, and
   an assist ratio determination unit (9) for determining the assist ratio of said assist power drive unit (3) to said human drive unit (2) on the basis of said acceleration from said acceleration detection unit (6),
   **characterized in that** said control unit (4) further comprises:

   a human drive power detection unit (5) for detecting a human drive force,
   a reference environment setting unit (7) for presetting various reference parameters in a reference environment wherein said vehicle runs, and
   an acceleration calculation unit in said reference environment (8) for calculating an acceleration in said reference environment in the case where said vehicle runs in said reference environment on the basis of said human drive force from said human drive power detection unit (5), said speed from said acceleration detection unit (6) and said parameters in said reference environment from said reference environment setting unit (7), and
wherein said assist ratio determination unit (9) is arranged to determine the assist ratio of said assist power drive unit (3) to said human drive unit (2) also on the basis of said acceleration in said reference environment from said acceleration calculation unit (8).

2.  A vehicle with a power assist unit in accordance with Claim 1, wherein said acceleration calculation unit (8) calculates said acceleration in said reference environment by using an equation of motion for said vehicle.

3.  A vehicle with a power assist unit in accordance with Claim 2, wherein said equation of motion for said vehicle is represented by:

$$m \times \alpha + d \times V + m \times g \times \sin\theta = Fh + Q \times Fh$$

wherein m is the overall weight of said vehicle, $\alpha$ is the acceleration of said vehicle, V is the speed of said vehicle, d is running resistances exerted on said vehicle, g is the gravitational acceleration exerted on said vehicle, $\theta$ is the inclination angle of a road surface on which said vehicle is running, Fh is a human drive force and Q is an assist ratio.

4.  A method of controlling a vehicle with power assist unit, wherein said vehicle comprises a vehicle running unit (1) for running said vehicle, a human drive unit (2) for supplying a human drive power to said vehicle running unit (1) and an assist power drive unit (3) for supplying assist power to said vehicle running unit (1), said method comprising:

> a detection step (S1) for detecting the speed and the acceleration of said vehicle, and a human drive force supplied to said vehicle running unit (1),
> an acceleration calculation step (S3) for calculating an acceleration in a reference environment in the case where said vehicle runs in said reference environment on the basis of said speed and said human drive force detected in said detection step (S1), and preset various reference parameters for said reference environment, and
> a determination step (S4,S5,S6) for determining the assist ratio of said assist power drive unit (3) to said human drive unit (2) on the basis of said acceleration detected in said detection step (S1) and said acceleration in said reference environment calculated in said acceleration calculation step (S3).

5.  A method of controlling a vehicle with power assist unit in accordance with Claim 4, wherein said acceleration in said reference environment is calculated by using an equation of motion for said vehicle in said acceleration calculation step (S3).

6.  A method of controlling a vehicle with power assist unit in accordance with Claim 5, wherein said equation of motion for said vehicle is represented by:

$$m \times \alpha + d \times V + m \times g \times \sin\theta = Fh + Q \times Fh$$

wherein m is the overall weight of said vehicle, $\alpha$ is the acceleration of said vehicle, V is the speed of said vehicle, d is running resistances exerted on said vehicle, g is the gravitational acceleration exerted on said vehicle, $\theta$ is the inclination angle of a road surface on which said vehicle is running, Fh is a human drive force, and Q is an assist ratio.

**Patentansprüche**

1.  Fahrzeug mit einer Leistungshilfseinheit, mit einer Fahrzeugfahreinheit (1) zum Betreiben des Fahrzeuges, einer menschlichen Antriebs-Einheit (2) zum Bereitstellen einer menschlichen Antriebsleistung an die Fahrzeugfahreinheit (1), einer Hilfsleistungsantriebseinheit (3) zum Bereitstellen einer Hilfsleistung an die Fahrzeugfahreinheit (1), und einer Steuerungseinheit (4) zum Steuern der Hilfsleistungsantriebseinheit (3), wobei die Steuerungseinheit (4) aufweist:

> eine Beschleunigungsdetektionseinheit (6) zum Detektieren der Geschwindigkeit und der Beschleunigung des Fahrzeuges, und

eine Hilfsverhältnisbestimmungseinheit (9) zum Bestimmen des Hilfsverhältnisses der Hilfsleistungsantriebseinheit (3) zu der menschlichen Antriebs-Einheit (2) auf der Basis der Beschleunigung von der Beschleunigungsdetektionseinheit (6),
**dadurch gekennzeichnet, dass** die Steuerungseinheit (4) ferner aufweist:

eine menschliche Antriebsleistungs-Detektionseinheit (5) zum Detektieren der menschlichen Antriebskraft,
eine Referenzumgebungseinstellungseinheit (7) zum Voreinstellen verschiedener Referenzparameter in einer Referenzumgebung, wobei das Fahrzeug fährt, und
eine Beschleunigungsberechnungseinheit in der Referenzumgebung (8) zum Berechnen einer Beschleunigung in der Referenzumgebung in dem Fall, in dem das Fahrzeug in der Referenzumgebung fährt, auf der Basis der menschlichen Antriebskraft von der menschlichen Antriebsleistungs-Detektionseinheit (5), der Geschwindigkeit von der Beschleunigungsdetektionseinheit (6) und den Parametern in der Referenzumgebung von der Referenzumgebungseinstellungseinheit (7), und
wobei die Hilfsverhältnisbestimmungseinheit (9) angeordnet ist, um das Hilfsverhältnis der Hilfsleistungsantriebseinheit (3) zu der menschlichen Antriebs-Einheit (2) auch auf der Basis der Beschleunigung in der Referenzumgebung von der Beschleunigungsberechnungseinheit (8) zu bestimmen.

2. Fahrzeug mit einer Leistungshilfseinheit gemäß Anspruch 1, wobei die Beschleunigungsberechnungseinheit (8) die Beschleunigung in der Referenzumgebung durch Verwendung einer Bewegungsgleichung für das Fahrzeug berechnet.

3. Fahrzeug mit Leistungshilfseinheit gemäß Anspruch 2, wobei die Bewegungsgleichung für das Fahrzeug repräsentiert wird durch:

$$m \times a + d \times V + m \times g \times \sin\Theta = Fh + Q \times Fh$$

wobei m das Gesamtgewicht des Fahrzeuges ist, $\alpha$ die Beschleunigung des Fahrzeuges ist, V die Geschwindigkeit des Fahrzeuges ist, d die Fahrwiderstände sind, die auf das Fahrzeug ausgeübt werden, g die Gravitationsbeschleunigung ist, die auf das Fahrzeug ausgeübt wird, $\Theta$ der Neigungswinkel einer Straßenoberfläche ist, auf welcher das Fahrzeug fährt, Fh eine menschliche Antriebskraft ist und Q ein Hilfsverhältnis ist.

4. Verfahren zum Steuern eines Fahrzeuges mit einer Leistungshilfseinheit, wobei das Fahrzeug eine Fahrzeugfahreinheit (1) zum Betreiben des Fahrzeuges, eine menschliche Antrieb-Einheit (2) zum Bereitstellen einer menschlichen Antriebsleistung an die Fahrzeugfahreinheit (1) und eine Hilfsleistungsantriebseinheit (3) zum Bereitstellen einer Hilfsleistung an die Fahrzeugfahreinheit (1) aufweist, wobei das Verfahren aufweist:

einen Detektionsschritt (S1) zum Detektieren der Geschwindigkeit und der Beschleunigung des Fahrzeuges und einer menschlichen Antriebskraft, die der Fahrzeugfahreinheit (1) bereitgestellt wird,
einen Beschleunigungsberechnungsschritt (S3) zum Berechnen einer Beschleunigung in einer Referenzumgebung in dem Fall, in dem das Fahrzeug in der Referenzumgebung fährt, auf der Basis der Geschwindigkeit und der menschlichen Antriebskraft, die in dem Detektionsschritt (S1) detektiert sind, und voreingestellten verschiedenen Referenzparametern für die Referenzumgebung, und
einen Bestimmungsschritt (S4, S5, S6) zum Bestimmen des Hilfsverhältnisses der Hilfsleistungsantriebseinheit (3) zu der menschlichen Antriebs-Einheit (2) auf der Basis der Beschleunigung, die in dem Detektionsschritt (S1) detektiert ist, und der Beschleunigung in der Referenzumgebung, die in dem Beschleunigungsberechnungsschritt (S3) berechnet ist.

5. Verfahren zum Steuern eines Fahrzeuges mit einer Leistungshilfseinheit gemäß Anspruch 4, wobei die Beschleunigung in der Referenzumgebung durch Verwenden einer Bewegungsgleichung für das Fahrzeug in dem Beschleunigungsberechnungsschritt (S3) berechnet wird.

6. Verfahren eines Steuerns eines Fahrzeuges mit einer Leistungshilfseinheit gemäß Anspruch 5, wobei die Bewegungsgleichung für das Fahrzeug repräsentiert wird durch:

$$m \times a + d \times V + m \times g \times \sin\Theta = Fh + Q \times Fh$$

wobei m das Gesamtgewicht des Fahrzeuges ist, $\alpha$ die Beschleunigung des Fahrzeuges ist, V die Geschwindigkeit des Fahrzeuges ist, d die Fahrwiderstände sind, die auf das Fahrzeug ausgeübt werden, g die Gravitationsbeschleunigung ist, die auf das Fahrzeug ausgeübt wird, $\Theta$ der Neigungswinkel einer Straßenoberfläche ist, auf welcher das Fahrzeug fährt, Fh eine menschliche Antriebskraft ist und Q ein Hilfsverhältnis ist.

## Revendications

1. Véhicule avec une unité de moteur auxiliaire, comprenant une unité (1) de déplacement de véhicule permettant de déplacer ledit véhicule, une unité (2) de conduite humaine permettant de fournir une puissance de conduite humaine à ladite unité (1) de déplacement de véhicule, une unité (3) de commande de moteur auxiliaire permettant de fournir une puissance auxiliaire à ladite unité (1) de déplacement de véhicule, et une unité (4) de commande permettant de commander ladite unité (3) de commande de moteur auxiliaire, ladite unité (4) de commande comprenant :

   une unité (6) de détection d'accélération permettant de détecter la vitesse et l'accélération dudit véhicule et,
   une unité (9) de détermination de rapport d'assistance permettant de déterminer le rapport d'assistance de ladite unité (3) de commande de moteur auxiliaire à ladite unité (2) de conduite humaine, en fonction de ladite accélération en provenance de ladite unité (6) de détection d'accélération,
   **caractérisé en ce que** ladite unité (4) de commande comprend en outre :

   une unité (5) de détection de puissance de conduite humaine permettant de détecter une force de conduite humaine,
   une unité (7) d'établissement d'environnement de référence permettant de présélectionner des paramètres de référence divers dans un environnement de référence dans lequel le véhicule se déplace, et
   une unité (8) de calcul d'accélération dans ledit environnement de référence permettant de calculer une accélération dans ledit environnement de référence, au cas où ledit véhicule se déplace dans ledit environnement de référence, en fonction de ladite force de conduite humaine en provenance de l'unité (5) de détection de puissance de conduite humaine, de ladite vitesse en provenance de ladite unité (6) de détection d'accélération, et desdits paramètres dans ledit environnement de référence en provenance de ladite unité (7) d'établissement d'environnement de référence, et
   dans lequel ladite unité (9) de détermination de rapport d'assistance est prévue afin de déterminer le rapport d'assistance de ladite unité (3) de commande de moteur auxiliaire à ladite unité (2) de conduite humaine, également en fonction de ladite accélération dans ledit environnement de référence en provenance de ladite unité (8) de calcul d'accélération.

2. Véhicule avec une unité de moteur auxiliaire selon la revendication 1, dans lequel ladite unité (8) de calcul d'accélération calcule ladite accélération dans ledit environnement de référence, en utilisant une équation de mouvement destinée audit véhicule.

3. Véhicule avec une unité de moteur auxiliaire selon la revendication 2, dans lequel ladite équation de mouvement destinée audit véhicule est représentée par :

$$m \times \alpha + d \times V + m \times g \times \sin\beta = Fh + Q \times Fh$$

dans laquelle m est le poids total dudit véhicule, $\alpha$ est l'accélération dudit véhicule, V est la vitesse dudit véhicule, d représente les résistances au roulement exercées sur ledit véhicule, g est l'accélération gravitationnelle exercée sur ledit véhicule, $\beta$ est l'angle d'inclinaison d'une surface de route sur laquelle ledit véhicule se déplace, Fh est une force de conduite humaine et Q est un rapport d'assistance.

4. Procédé de commande d'un véhicule avec une unité de moteur auxiliaire, dans lequel ledit véhicule comprend une unité (1) de déplacement de véhicule permettant de déplacer ledit véhicule, une unité (2) de conduite humaine permettant de fournir une puissance de conduite humaine à ladite unité (1) de déplacement de véhicule et une unité (3) de commande de moteur auxiliaire permettant de fournir une puissance auxiliaire à ladite une unité (1) de déplacement de véhicule, ledit procédé comprenant :

une étape (S1) de détection permettant de détecter la vitesse et l'accélération dudit véhicule, et une force de conduite humaine fournie à ladite unité (1) de déplacement de véhicule,

une étape (S3) de calcul d'accélération permettant de calculer une accélération dans un environnement de référence, au cas où ledit véhicule se déplace dans ledit environnement de référence, en fonction de ladite vitesse et de ladite force de conduite humaine détectées dans ladite étape (S1) de détection, et des paramètres de référence divers présélectionnés destinés audit environnement de référence, et

une étape (S4, S5 et S6) de détermination permettant de déterminer le rapport d'assistance de ladite unité (3) de commande de moteur auxiliaire à ladite unité (2) de conduite humaine, en fonction de ladite accélération détectée dans ladite étape (S1) de détection et de ladite accélération dans ledit environnement de référence calculée dans ladite étape (S3) de calcul d'accélération.

5. Procédé de commande d'un véhicule avec une unité de moteur auxiliaire selon la revendication 4, dans lequel ladite accélération dans ledit environnement de référence est calculée en utilisant une équation de mouvement destinée audit véhicule, dans ladite étape (S3) de calcul d'accélération.

6. Procédé de commande d'un véhicule avec une unité de moteur auxiliaire selon la revendication 5, dans lequel ladite équation de mouvement destinée audit véhicule est représentée par :

$$m \times \alpha + d \times V + m \times g \times \sin\beta = Fh + Q \times Fh$$

dans laquelle m est le poids total dudit véhicule, $\alpha$ est l'accélération dudit véhicule, V est la vitesse dudit véhicule, d représente les résistances au roulement exercées sur ledit véhicule, g est l'accélération gravitationnelle exercée sur ledit véhicule, $\beta$ est l'angle d'inclinaison d'une surface de route sur laquelle ledit véhicule se déplace, Fh est une force de conduite humaine et Q est un rapport d'assistance.

FIG. 1

EP 0 926 059 B1

FIG. 2

Control unit ~4

Human drive power detection unit ~5

Acceleration detection unit ~6

Speed detection unit ~6a

Current acceleration calculation unit ~6b

Reference environment setting unit ~7

Acceleration calculation unit in reference environment ~8

Assist ratio determination unit ~9

Vehicle running unit ~1

Human drive unit ~2

Assist power drive unit ~3

EP 0 926 059 B1

FIG. 3

Human
drive
force

Time

FIG. 4

Acceleration
in the
reference
environment

Human drive force

# FIG. 5

```
        ( Start )
            │
            ▼
┌─────────────────────────────┐
│ Detect human drive force    │ ～ S1
│ transmitted to vehicle running unit. │
└─────────────────────────────┘
            │
            ▼
┌─────────────────────────────┐
│ Output detected human drive force to │
│ acceleration calculation unit in    │ ～ S2
│ reference environmnet and assist    │
│ ratio determination unit.           │
└─────────────────────────────┘
            │
            ▼
┌─────────────────────────────┐
│ Calculate acceleration in reference │
│ environment on the basis of human   │
│ drive force from human drive power  │ ～ S3
│ detection unit, speed from speed     │
│ detection unit and preset reference  │
│ environment parameters from reference│
│ environment setting unit.            │
└─────────────────────────────┘
            │
            ▼
         ╱‾‾‾‾‾‾‾╲        ～ S4
        ╱ Is current ╲
       ╱ acceleration larger ╲
       ╲ than acceleeration in ╱──── NO
        ╲  reference  ╱
         ╲environment?╱
            │
          YES│                        │
            ▼                         ▼
┌──────────────────┐     ┌──────────────────┐
│ Set smaller value │ ～ S5 │ Set larger value  │
│ as assist ratio.  │     │ as assist ratio.  │
└──────────────────┘     └──────────────────┘
            │                  ～ S6 │
            │◄────────────────────────┘
            ▼
        ( End )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI6255564 B
- JP HEI899683 B
- EP 0734945 A